# EUROPEAN PATENT APPLICATION

(11) **EP 2 383 881 A1**
(43) Date of publication of application: **02.11.2011**
(21) Application number: 11161972.2
(22) Date of filing: 12.04.2011
(51) Int. Cl.: H02P 9/04, H02M 7/48

(54) **Inverter type engine generator**

(30) Priority: 27.04.2010 JP 2010102021
(71) Applicant: Honda Motor Co., Ltd., Tokyo 107-8556 (JP)
(72) Inventor: Ueno, Masanori, Saitama 351-0193 (JP); Ogawa Makoto, Saitama 351-0193 (JP)
(74) Representative: Herzog, Markus

(57) **Abstract**

Generator output specifications according to destination are satisfied by an alternator with a single output band and a generator output voltage is made automatically adjustable in accordance with a load. An engine generator (1) includes an alternator (3), a rectifier (51), a DC-DC converter (52), and an inverter (53). A comparing unit (12) compares an output voltage of the alternator (3) with a reference. The DC-DC converter (52) decreases voltage if the output voltage of the alternator (3) is greater than the reference, and the DC-DC converter (52) increases voltage if the output voltage of the alternator (3) is less than the reference. The DC-DC converter (52) is PWM controlled at an intermediate duty ratio when the output voltage of the alternator (3) is equal to the reference, a duty ratio is increased from the intermediate value, and the duty ratio is decreased from the intermediate value.

## Description

### Technical Field

The present invention relates to an inverter type engine generator, and particularly relates to an inverter type engine generator that enables a wide range of generator output voltage to be obtained without depending on an output voltage of an alternator driven by an engine and at the same time can avoid reduction of the generated output when a load is increased.

### Background Art

An inverter type generator that includes a rectifier, converting a three-phase AC output voltage from an alternator driven by an engine to a DC voltage, and an inverter, converting the DC output of the rectifier to an AC output voltage, and supplies power by the AC output voltage from the inverter is known. As the rectifier, a hybrid bridge circuit using diodes and thyristors and a system using a full wave rectifier and an increase or decrease voltage regulator are known. A hybrid engine generator in which a hybrid bridge circuit is used is described in Patent Document 1. Also, a generator having a chopper circuit 5 that enables a DC voltage supplied from a solar cell to increase is described in Patent Document 2.

### Citation List

### Patent Literature

Patent Literature 1 "Japanese Patent Publication No. 3941927"
Patent Literature 2 "Japanese Published Unexamined Patent Publication No. 09-163626"

### Summary of Invention

### Technical Problem

The inverter type engine generator enables an output voltage required according to destination (country) to be obtained by the inverter and is thus more convenient in comparison to a synchronous generator. However, a control range of the inverter depends on the output voltage of the alternator and an alternator that can output a voltage that is in accordance with the destination must thus be prepared in advance.

Also, an alternator has drooping characteristics with which the output voltage decreases in accordance with a magnitude of a load (load current), and the output voltage may thus vary instantaneously due to a load variation. Increase in a rated point (rated current) in accordance with descendent of the output voltage due to the load variation may thus be considered. However, although this is convenient in a high load region, a difference (potential difference) between a target voltage value for obtaining the rated current and the output voltage of the alternator becomes large in a low load region. The potential difference is wasted entirely as heat energy and it is thus desired that the potential difference be made as small as possible.

Also, to prevent engine stall due to overload, an overload mode is provided as well to control the inverter to reduce the generator output in an overload region.

Thus, with an inverter type engine generator, there are the issues that alternators that differ in output voltage specification must be prepared in advance according to respective destinations and the inverter control of reducing the generator output according to overload is required.

An object of the present invention is to provide, in response to the above issues, an inverter type engine generator that can accommodate predetermined voltages of destinations by using an alternator with a single type of output specification and does away with a need for suppression control of a generator output by the inverter.

### Solution to Problem

A first feature of the present invention is an inverter type engine generator comprising: an alternator driven by an engine; a rectifier rectifying an output of the alternator; a DC-DC converter performing voltage conversion of a DC voltage output from the rectifier; and an inverter converting an output of the DC-DC converter to AC and outputting the AC as the generator output; and wherein the DC-DC converter is a voltage increase/decrease DC-DC converter that outputs increased or decreased the input voltage, the inverter type engine generator further comprising: a comparing unit comparing the output voltage of the alternator and a reference voltage; and a controller making the DC-DC converter perform the voltage decrease operation if, as a result of comparison of the comparing unit, the output voltage of the alternator is greater than the reference voltage, and making the DC-DC converter perform the voltage increase operation if the output voltage of the alternator is less than the reference voltage.

A second feature of the present invention is the inverter type engine generator, wherein the DC-DC converter includes a switching element for outputting increased or decreased the input voltage, and the controller includes a PWM controller arranged to set the switching element to be driven at an intermediate value of a duty ratio adjustment range when the output voltage of the alternator is equal to the reference voltage, to perform the voltage increase operation by making the duty ratio larger than the intermediate value, and to perform the voltage decrease operation by making the duty ratio less than the intermediate value.

A third feature of the present invention is the inverter type engine generator, wherein the reference voltage is set to a single voltage within a predetermined generator output voltage range, and as the alternator, an alternator with a rated output voltage corresponding to an intermediate value of the predetermined generator output range is selected.

### Advantageous Effects of Invention

According to the above aspects of the present invention, the voltage increase/decrease DC-DC converter can be made to perform the voltage decrease operation or the voltage increase operation according to a magnitude relationship of the output voltage of the alternator with respect to the reference voltage, and the generator output of the voltage value set as the reference value can thus be obtained regardless of the output voltage of the alternator.

For example, according to the third aspect of the present invention, the voltage increase/decrease DC-DC converter is made to perform the voltage decrease operation or the voltage increase operation according to the reference value that is set within the predetermined generator output voltage range, and thus a voltage specification that differs according to destination can be accommodated by preparing an alternator with a single type of output voltage specification.

Also, with an alternator with which the output voltage has drooping characteristics with respect to the load current, an increase in the load causes the output voltage of the alternator to change and thus the magnitude relationship of the alternator output voltage with respect to the reference voltage to change. The voltage increase/decrease converter thus operates in accordance with the change so that the generator output voltage increases or decreases to accommodate the increase in the load.

Also, according to the second aspect of the present invention, switching between the voltage decrease operation and the voltage increase operation can be performed as suited by increasing or decreasing the duty ratio of the voltage increase/decrease DC-DC converter and control is thus easy.

### Brief Description of Drawings

FIG. 1 is a block diagram of a system arrangement of an inverter type engine generator according to an embodiment of the present invention.
FIG 2 is an explanation diagram of operation of the inverter type engine generator shown in FIG. 1.
FIG 3 is an explanation diagram of operation during overload of the inverter type engine generator shown in FIG 1.
FIG. 4 is a block diagram of control functions of the inverter type engine generator.

### Description of Embodiments

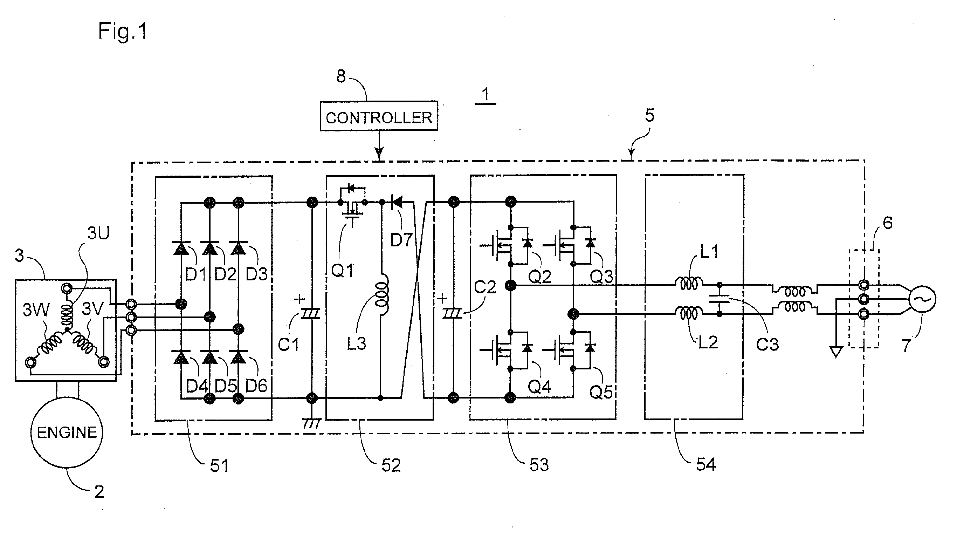

An embodiment of the present invention shall now be described with reference to the drawings. FIG 1 is a system arrangement diagram of an inverter type engine generator according to an embodiment of the present invention. In FIG 1, the inverter type engine generator 1 has an alternator 3 that is coupled to an engine 2 and is driven by the engine 2. The alternator 3 is arranged, for example, from a three-phase multipolar magnetic generator. An output side of the alternator 3 is connected to an output control apparatus 5. The output control apparatus 5 is arranged from a rectifier 51, a voltage increase/decrease converter 52, an inverter 53, and a waveform shaping circuit 54.

The rectifier 51 is a full wave rectifier bridge circuit that includes diodes D1, D2, and D3, and D4, D5, and D6. A winding 3U of the alternator 3 is connected to a junction of the diodes D1 and D4, a winding 3V is connected to a junction point of the diodes D2 and D5, and a winding 3W is connected to a junction of the diodes D3 and D6, respectively.

The voltage increase/decrease converter 52 is a voltage converting circuit that increases or decreases an input DC voltage and includes a switching element (FET) Q1, a choke coil L3, and a diode D7, and capacitors C1 and C2 are connected in parallel to an input side and an output side, respectively. The inverter 53 is arranged by bridge connection of four FETs Q2, Q3, Q4, and Q5, respectively. The waveform shaping circuit 54 is arranged from coils L1 and L2 and a capacitor C3.

A controller 8 performs PWM control of the FET Q1 of the voltage increase/decrease converter 52 and the FETs Q2 to Q5 of the inverter 53. The voltage increase/decrease converter 52 increases or decreases the input DC voltage. The inverter 53 converts an input voltage into an AC voltage of a predetermined frequency and inputs the AC voltage into the waveform shaping circuit 54. The waveform shaping circuit 54 is connected to an output terminal (for example, an outlet) 6 for taking out a generator output to the exterior. A load 7 is connected to the outlet 6.

An operation of the voltage increase/decrease converter 52 shall now be described. The FET Q1 is driven by a PWM signal from the controller 8 and in accordance with a duty ratio (on time/on-off cycle) of the PWM signal. During the time in which the FET Q 1 is on, a current due to the input voltage from the rectifier 51 1 flows through the diode D7 and the FET Q1. Charge is accumulated in the choke coil L3 and the capacitor C2 during the time in which the FET Q1 is on. When the FET Q1 then turns off, a potential due to the charge accumulated in the choke coil L3 and the capacitor C2 is added to the input voltage from the rectifier 51 and the increased voltage is applied to the load 7.

A relationship of the duty ratio and a voltage increase ratio of the voltage increase/decrease converter 52 is expressed by the following equation. Output voltage = Duty ratio x input voltage/(1-duty ratio)...(Equation 1). According to Equation 1, the voltage increase/decrease converter 52 performs a increase operation in a region in which the duty ratio is no less than 50% and performs a decrease operation when the duty ratio is less than 50%.

The alternator 3 is set so that an output voltage of the alternator 3 takes on a substantially intermediate value in a generator output voltage range that is assumed. For example, if the generator output voltage range is assumed to be 100 volts to 230 volts AC, the alternator 3 is set, for example, to an output voltage specification with which a substantially intermediate voltage of 165 volts is obtained from the rectifier 51 so that a voltage of 141 volts to 320 volts can be output as the output of the rectifier 51. Then, if 100 volts AC is demanded as the generator output, the voltage increase/decrease converter 52 is driven at a duty ratio of less than 50% (for example, 30%) to decrease the input voltage of 165 volts to 141 volts. Also, if 230 volts AC is demanded as the generator output, the voltage increase/decrease converter 52 is driven at a duty ratio of no less than 50% (for example, 80%) to step up the input voltage of 165 volts to 320 volts.

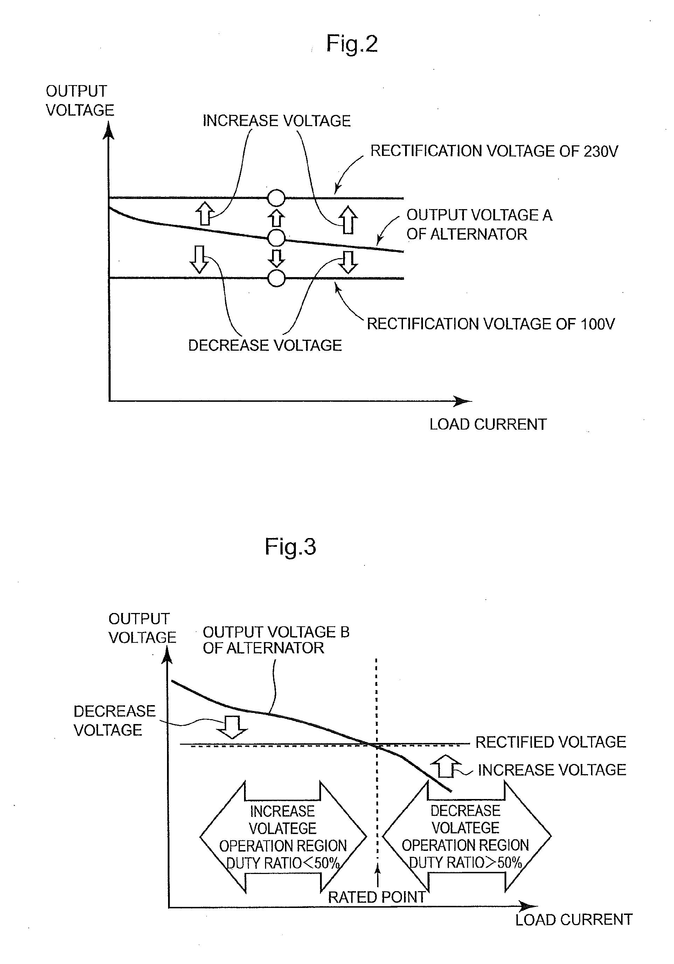

An example of this operation of the voltage increase/decrease converter 52 is shown in FIG 2. As shown in FIG 2, a load current and output voltage relationship of the alternator 3 has drooping characteristics with which the output voltage of the alternator 3 decreases with respect to the load current. In order to obtain a generator output voltage for a 230 volt system with output characteristics of the alternator 3 with which the rated output is 165 volts (the output of the rectifier 51 is 230 volts), the voltage increase/decrease converter 52 is made to perform the increase operation to obtain the output voltage of 230 volts. On the other hand, to obtain a generator output voltage for a 100 volt system, the voltage increase/decrease converter 52 is made to perform the decrease operation to obtain the output voltage of 100 volts. The output characteristics A have drooping characteristics and thus the duty ratio of the FET Q1 for increasing is risen up along with the load current, and the duty ratio of the FET Q1 for decreasing is fell down along with the load current.

FIG. 3 is a diagram of operation of the voltage increase/decrease converter 52 in accordance with the load. In FIG. 3, when, with the alternator 3 having drooping characteristics B, a load current exceeding a rated point (rated current) flows, the output voltage decreases and thus for a load current higher than the rated point, the voltage increase/decrease converter 52 is made to perform the voltage increase operation. On the other hand, when a load current less than the rated point (rated current) flows, the output voltage increases and thus for a load current lower than the rated point, the voltage increase/decrease converter 52 is made to perform the voltage decrease operation.

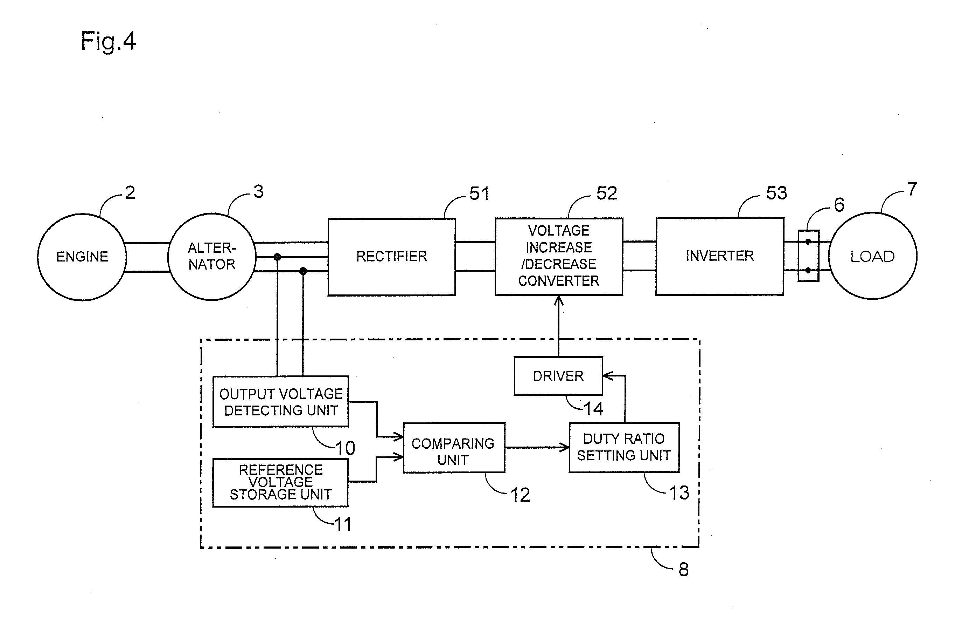

FIG 4 is a block diagram of principal functions of the controller 8. The functions of the controller 8 can be realized by a microcomputer. In FIG. 4, the controller 8 includes an output voltage detecting unit 10, a reference voltage storage unit 11, a comparing unit 12, a duty ratio setting unit 13, and a driver 14. The output voltage detecting unit 10 detects a voltage across two phases for the AC output of the alternator 3. A value of a demanded generator output voltage is set in advance in the reference voltage storage unit 11. The comparing unit 12 compares the detected output voltage of the alternator 3 and the reference voltage value and outputs a magnitude relationship of the output voltage with respect to the reference voltage value.

If the comparison result indicates that the reference voltage value is less than the output voltage value, the duty ratio setting unit 13 provides the driver 14 with an instruction to drive the FET Q1 upon setting the duty ratio to no less than 50%. The driver 14 drives the FET Q1 of the voltage increase/decrease converter 52 in accordance with the drive instruction. The output voltage of the voltage increase/decrease converter 52 thereby increases.

If the output voltage of the alternator 3 is greater than the reference voltage value, the duty ratio setting unit 13 provides the driver 14 with an instruction to drive the FET Q1 upon setting the duty ratio to less than 50%. The driver 14 drives the FET Q1 of the voltage increase/decrease converter 52 in accordance with the drive instruction. The output voltage of the voltage increase/decrease converter 52 thereby decreases.

For example, if 100 volts is demanded as the generator output voltage, the reference voltage value is set to 100 volts, and if 230 volts is demanded as the generator output voltage, the reference voltage value is set to 230 volts.

Then, as the alternator 3, an alternator with a rated output voltage value close to an intermediate value between 100 volts and 230 volts (for example, an alternator with a 165 volt output specification) is prepared.

Then, for example, if a commercial voltage of the destination is 100 volts, the duty ratio is set to less than 50% and the voltage increase/decrease converter 52 is made to perform the voltage decrease operation, and if the commercial voltage is 230 volts, the duty ratio 2 is set to no less than 50% and the voltage increase/decrease converter 52 is made to perform the voltage increase operation.

By thus making the voltage increase/decrease converter 52 perform the voltage increase or decrease operation based on the commercial voltage of the destination or other demanded generator output voltage and the rated output voltage of the alternator 3, a generator output voltage of a wider range can be obtained with an alternator with a single type of output band.

Also, the alternator 3 has drooping characteristics with respect to the load current and thus if the load become excessive, the output voltage of the alternator 3 decreases. When the load current increases while the voltage increase/decrease converter 52 is performing the voltage increase operation, the output voltage of the alternator 3 decreases in accordance with the amount of increase in the load current and drive at a duty ratio of no less than 50% is promoted. On the other hand, when the load current increases while the voltage increase/decrease converter 52 is performing the voltage decrease operation, the output voltage of the alternator 3 decreases in accordance with the amount of increase in the load current and the increase in the load current cannot be accommodated by drive at a duty ratio of less than 50%. Thus, when descending of the output voltage of the alternator 3 is recognized during the voltage decrease operation, the duty ratio is set to no less than 50% and switching to the voltage increase operation is performed. The load current decreases due to increase in the generator output voltage and consequently, the output voltage of the alternator 3 with the drooping characteristics increases. Power can thus be supplied to the load 7 without reducing the generator output.

By thus changing the duty ratio of the voltage increase/decrease converter 52 based on the relationship of the output voltage of the alternator 3 and the reference voltage value, the demanded generator voltage can be output to the output terminal 6 (outlet).

As described above, by the present embodiment, generator voltages for various countries can be output by the alternator 3 having the single type of output voltage specification and overloads can be accommodated for appropriately.

Although the present invention has been described in accordance with the embodiment, the present invention is not restricted to the embodiment and modifications are possible based on the matters described in the claims and the known art. For example, the voltage increase/decrease converter 52 of the embodiment may also be applied to a hybrid engine generator that not only includes the engine-driven alternator 3 as the power supply source but also includes a battery as a second power supply source.

Generator output specifications according to destination are satisfied by an alternator with a single output band and a generator output voltage is made automatically adjustable in accordance with a load. An engine generator (1) includes an alternator (3), a rectifier (51), a DC-DC converter (52), and an inverter (53). A comparing unit (12) compares an output voltage of the alternator (3) with a reference. The DC-DC converter (52) decreases voltage if the output voltage of the alternator (3) is greater than the reference, and the DC-DC converter (52) increases voltage if the output voltage of the alternator (3) is less than the reference. The DC-DC converter (52) is PWM controlled at an intermediate duty ratio when the output voltage of the alternator (3) is equal to the reference, a duty ratio is increased from the intermediate value, and the duty ratio is decreased from the intermediate value.

### Reference Signs List

1 ... inverter type engine generator
2 ... engine
3 ... alternator
5 ... output control apparatus
7 ... load
8 ... controller
10 ... output voltage detecting unit
11 ... reference voltage storage unit
12 ... comparing unit
13 ... duty ratio setting unit
14 ... driver
52 ... voltage increase/decrease converter

## Claims

1. An inverter type engine generator comprising: an alternator (3) driven by an engine (2); a rectifier (51) rectifying an output of the alternator (3); a DC-DC converter (52) performing voltage conversion of a DC voltage output from the rectifier (51); and an inverter (53) converting an output of the DC-DC converter (52) to AC and outputting the AC as the generator output; and
wherein the DC-DC converter (52) is a voltage increase/decrease DC-DC converter that outputs increased or decreased the input voltage,
the inverter type engine generator further comprising: a comparing unit (12) comparing the output voltage of the alternator (3) and a reference voltage; and
a controller (8) making the DC-DC converter (52) perform the voltage decrease operation if, as a result of comparison of the comparing unit, the output voltage of the alternator (3) is greater than the reference voltage, and making the DC-DC converter (52) perform the voltage increase operation if the output voltage of the alternator (3) is less than the reference voltage.

2. The inverter type engine generator according to Claim 1, wherein the DC-DC converter includes a switching element for outputting increased or decreased the input voltage, and
the controller (8) includes a PWM controller (13) arranged to set the switching element to be driven at an intermediate value of a duty ratio adjustment range when the output voltage of the alternator (3) is equal to the reference voltage, to perform the voltage increase operation by making the duty ratio larger than the intermediate value, and to perform the voltage decrease operation by making the duty ratio less than the intermediate value.

3. The inverter type engine generator according to Claim 2, wherein the reference voltage is set to a single voltage within a predetermined generator output voltage range, and
as the alternator, an alternator with a rated output voltage corresponding to an intermediate value of the predetermined generator output range is selected.
